# EUROPEAN PATENT SPECIFICATION

(11) **EP 3 679 547 B1**
(45) Date of publication and mention of the grant of the patent: **15.04.2026**
(21) Application number: 18762312.9
(22) Date of filing: 05.09.2018
(51) Int. Cl.: G06T 5/50

(54) **MULTI-VIEW DATA OF A BIOLOGICAL SAMPLE**
MEHRFACHANSICHTSDATEN EINER BIOLOGISCHEN PROBE
DONNÉES MULTI-VUES D'UN ÉCHANTILLON BIOLOGIQUE

(30) Priority: 06.09.2017 EP 17189688
(43) Date of publication of application: 15.07.2020
(73) Proprietor: Koninklijke Philips N.V., 5656 AG Eindhoven (NL)
(72) Inventor: WIMBERGER-FRIEDL, Reinhold, 5656 AE Eindhoven (NL); GALLARDO ESTRELLA, Leticia, 5656 AE Eindhoven (NL); VAN LEEUWEN, Marinus, Bastiaan, 5656 AE Eindhoven (NL); DE LAAT, Koen, 5656 AE Eindhoven (NL)
(74) Representative: Philips Intellectual Property & Standards
(86) International application number: PCT/EP2018/073870
(87) International publication number: WO 2019/048478

(56) References cited:
- US-A1- 2011 141 103
- US-A1- 2013 016 885
- US-A1- 2014 009 597

## Description

### FIELD OF THE INVENTION

The present invention relates to an apparatus for generating multi-view data of a field of view of a biological sample, and an associated method, system, computer program element, computer readable medium, and a networked computer system.

### BACKGROUND OF THE INVENTION

Pathology involves recognising particular morphological features on slides (or images of slides) that enable a pathologist to discern normal tissue from diseased (abnormal) tissue. Such morphological features or objects can sometimes be difficult to recognise in a single focal plane of a microscope. Using a digital microscope, the object table can be moved to move different planes into the correct focus. In digital pathology, the images need to be recorded before inspection by a pathologist without a decision being made on which features would require a different focal depth, or more than one focal depth, in order to be diagnosed correctly.

PCT/EP2017/053998 and PCT/EP2017/053965 concern an "Extended Depth of Field" approach to processing digital pathology images. Such methods can, however, be further improved.

US2014/0009597 discloses technique for reducing the data volume of Z stack image data.

### SUMMARY OF THE INVENTION

There is, therefore, a need to improve digital pathology imaging approaches. The object of the present invention is solved by the subject-matter of the appended independent claims, wherein further embodiments are incorporated in the dependent claims.

According to a first aspect, there is provided an apparatus for generating multi-view data of a field of view of a biological sample. The apparatus comprises:
- a processing unit.

The processing unit is configured to obtain a z-s comprising a plurality of slide images of a biological sample, wherein each slide image has been acquired at a predetermined focal offset relative to a depth direction of the biological sample, to determine a first object and a second object in the plurality of slide images, to provide, from the plurality of slide images, a first subset of object layer images of the first object based on a first image attribute of slide images of the first object, to provide, from the plurality of slide images, a second subset of object layer images of the second object based on a second image attribute of slide images of the second object, wherein an object layer image in the respective first or second subsets comprises an image region of a slide image corresponding to a slice through the first or second objects, wherein the layers of the z-stack comprising the first and second subsets of first and second object layer images are provided independently of each other based on the first and second attributes of the first and second objects, respectively, and to form an multi-view data of the field of view of the biological sample comprising at least first and second images, wherein the first image is from the first subset of object layer images and the second image is from the second subset of object layer images.

Accordingly, multi-view data is output from the apparatus having features of interest (objects) having improved acuity, even in cases where multiple objects appear to be stacked on top of each other in the original image. Conventional Extended Depth of Field (EDF) approaches lead to the merging together of superimposed objects in one image, degrading visual acuity in the field of view.

The first and second subsets of object layer images are optionally selected using independent criteria, and thus the first subset of object layer images may have a different number of object sub-images compared to the second subset of object layer images. This means that different objects are characterised using an appropriate number of z-stack images, further improving image acuity. In one case, each subset contains a single object layer image, enabling a lower memory usage.

A local determination of the number and vertical position of objects of interest may be made. Layer images related to the local objects of interest are determined based on a range of layers selected as input for creation of the specific images. The amount of data associated with layer images from the z-stack is significantly smaller than the amount of data associated with the input z-stack.

The two-dimensional extent of an object in the successive layer images of an object is optionally variable.

Thus, according to the first aspect, the multi-view data may occupy less memory space than would be the case with a conventional multi-layer digital pathology z-stack.

Optionally, a portion of the first object and the second object overlap along the depth direction (z) of the z-stack.

According to an embodiment of the first aspect, the processing unit is further configured to determine a focus function along a depth direction of the z-stack at a plurality of lateral locations of the z-stack as the first and second image attributes of the first and second objects, respectively to determine an optimum object layer image of each of the first and/or second subsets of object layer images as one of either the first and/or second object layer images having a maximized focus function along the depth direction; and to form the multi-view data as comprising the first and/or second optimum object layer images.

Accordingly, the optimum views for a plurality of objects in the acquired field of view of a biological object can be efficiently identified in such a stack of slide images.

Optionally, the focus function is used to identify first and second objects.

According to an embodiment, the total number of optimum object layer images corresponds to the total number of maxima in the focus functions at a plurality of lateral locations of the z-stack.

Therefore, it may be ensured that all objects characterised by a maximum of the focus function in the z-stack are extracted from the z-stack and provided in the multi-view data.

According to an embodiment, the processing unit is further configured to determine a plurality of subsidiary first and/or second object layer images as object layer images above, and/or below the optimum object layer image in the z-stack having focus functions which are smaller compared to the focus function of the optimum object layer image. The processing unit is configured to provide one or more of the subsidiary first and/or second object layer images as a portion of the multi-view data of the field of view of the biological sample.

Therefore, the overall acuity of one object may be improved by enabling contributions to the final object image from additional focus layers which still contain visual information about the object at the lateral location, but which have a lower focus value. In other words, focus layers containing visual information which is not associated with the object are omitted from the multi-view output image data at the lateral location of the object (although focus layers containing visual information irrelevant to that object may be used to illustrate another object at another lateral location of the image).

According to an embodiment, there is provided an apparatus according to the first aspect, wherein the processing unit is further configured to generate an Extended Depth of Field (EDF) image of the first and/or second object based on the first and/or second subset of object layer images, and to form the multi-view data of the field of view biological sample, wherein the first and/or second objects are presented as Extended Depth of Field (EDF) images composed of the first and/or second object layer images.

Therefore, each significant object in the field of view is optionally characterised using an EDF image. Extended depth of field images are provided, for example, using a "focus stacking" algorithm. Layers of the field of view which are not associated with a chosen object at the same lateral location are not included in the EDF image of the chosen object. This leads to EDF images which better characterise each chosen object.

According to an embodiment, there is provided an apparatus according to the first aspect, wherein the pixel values of lateral positions between the Extended Depth of Field (EDF) images of the first and/or second objects are interpolated.

It is beneficial for gaps between several EDF images to be interpolated, in order to reduce stitching artefacts.

According to an embodiment, there is provided an apparatus according to the first aspect wherein the processing unit is further configured to generate a laterally interpolated image by interpolating the pixel values between adjacent first and second object layer images in a lateral direction of the z-stack and to provide the laterally interpolated image as a portion of the multi-view data of the field of view of the biological sample at the lateral location.

According to an embodiment, there is provided an apparatus according to the first aspect, wherein the processing unit is further configured to identify, at least a second object in the z-stack in the depth direction of the z-stack and to form the multi-view data of the field of view of the biological sample as comprising both the first and the second objects at the lateral location, wherein the first and the second objects are (i) provided as independent first and second Extended Depth of Field (EDF) views of the first and second objects, and/or (ii) wherein the optimum object layer image of the first and second objects are provided.

The multi-view data may thus consist of a wide variety of types of output image, or sub-image. One area of the multi-view data corresponding to a first object can be provided as a EDF image, and the second area can be provided as an optimum object layer image, for example. It will be appreciated that many different combinations of image types can be used in the multi-view image.

According to an embodiment, determining the first and/or second object in the plurality of slide images of the z-stack comprises applying a sharpness filter, an edge filter, a contrast filter, or a focus function to images in the plurality of slide images, wherein the sharpness, edge, and contrast filters optionally operates on a grayscale value, a colour channel value, or an intensity threshold value of pixels of the plurality of slide images, to provide the first and/or second image attributes.

Dependent on the type of biological image, many different image processing approaches can be applied to distinguish objects in any image of the acquired z-stack. In stained, or histopathology approaches, the use of colour channels may be preferred.

Optionally, distinguishing items in the z-stack of images may be performed by distinguishing the edges of bodies such as cell nuclei.

According to an embodiment, there is provided an apparatus according to the first aspect, further configured to display on the user display the multi-view data of the field of view biological sample on a user interface of a user display.

According to an embodiment, there is provided an apparatus according to the first aspect, wherein the apparatus is further configured to provide on the user display (i) a schematic menu illustrating a detected object and its identified focus layers in the z-stack, and (ii) a field of view display window. The schematic menu enables a user to select a layer of the object of interest from the schematic menu, and multi-view data of the field of view biological sample is displayed in the field of view display window incorporating the layer of the object selected by the user.

Once first and second objects have been identified and extracted from the z-stack, there are many potential display options. An EDF view may be computed for each object in the field of view, with the EDFs being presented at the correct lateral locations in the field of view, and with pixel interpolation or stitching being provided in between the lateral locations in the field of view.

Optionally, the optimum focus image for each identified object may be provided at the correct lateral locations in the field of view without other identified objects being superimposed. The multi-view data may also be interactive. The apparatus can enable a user to hover a mouse cursor over the display area displaying the field of view, and a portion of the display proximal to the mouse cursor may be changed, for example, to cycle through the various view options in the multi-view data at that location. For example, if the mouse cursor hovers over a first object at a relevant lateral location, the apparatus may cycle through an EDF image, the optimum focus image, a conventional focus image comprising weighted contributions from all layers of the z-stack at the relevant lateral location. It will be appreciated by the skilled person that many variations in the motor display of the multi-view data may be provided.

Optionally, the first and second objects are detected at first and second lateral locations of the z-stack.

Optionally, the determination of the first object and the second object is made by segmentation based on filtering slide images of the plurality of slide images.

Optionally, the determination of the first object and second object is performed by connecting objects in the direction which belong to the same 3-D object.

Optionally, a focus value is generated for each pixel of the segmented object.

Optionally, the focus value is generated for each object.

Optionally, a one-dimensional focus map is generated for each object.

Optionally, optimum focus layers and ranges of adjacent layers are detected in the depth direction.

Optionally, an EDF value is calculated for each pixel of each object making use of a weighted sum of values from the selected range of layers.

Optionally, pixel values are interpolated in the space between objects by taking the pixel values from the layers obtained by interpolation the optimum focus layers of the nearest adjacent objects.

According to second aspect, there is provided a method for generating multi-view data of a field of view of a biological sample. The method comprises:
a) obtaining a z-stack comprising a plurality of slide images of a biological sample, wherein each slide image has been acquired at a predetermined focal offset relative to a depth direction of the biological sample;
b) determining a first object and a second object of the plurality of slide images in the plurality of slide images;
c) providing, from the plurality of slide images, a first subset of object layer images of the first object based on a first image attribute of slide images of the first object;
d) providing, from the plurality of slide images, a second subset of object layer images of the second object based on a second image attribute of slide images of the second object;
   wherein an object layer image in the respective first or second subsets comprises an image region of a slide image corresponding to a slice through the first or second objects;
   wherein the layers of the z-stack comprising the first and second subsets of first and second object layer images are provided independently of each other based on first and second image attributes of the first and second objects, respectively; and
e) forming multi-view data of the field of view of the biological sample comprising at least first and second images, wherein the first image is from the first subset of object layer images and the second image is from the second subset of object layer images.

According to a third aspect, there is provided a system for generating multi-view data of a biological sample. The system comprises:
- an apparatus in accordance with the first aspect or its embodiments; and
- a user display.

The apparatus is configured receive a z-stack comprising a plurality of slide images of a biological sample, and to display multi-view data of the field of view of the biological sample on the user display.

According to a fourth aspect, there is provided a computer program element for controlling an apparatus according to the first aspect, or its embodiments, which, when executed by a processing unit, is configured to carry out the method of the second aspect.

According to a fifth aspect, there is provided a computer readable medium having stored the computer program element of the fourth aspect.

According to a sixth aspect, there is provided a computer data structure comprising multi-view data of a field of view of a biological sample comprising first and/or second images at a first lateral position generated in accordance with the method one of the second aspect.

According to a seventh aspect of the invention, there is provided a networked computer system. The system comprises:
- a server device;
- a client device; and
- a communications network configured to provide data communication between the server device and the client device.

The server device is configured to perform the steps of the method according to the second aspect, or its optional embodiments.

The server device is configured to transmit the multi-view data of the field of view of the biological sample to the client device.

The client device is configured to receive the multi-view data of the field of view of the biological sample received from the server device.

In the following description, the term "multi-view data" refers to the result of a processing operation on a stack of slide images of a biological sample acquired from a multi-focus digital microscope. Conventionally, such a stack of slide images contains many objects of interest, but a user must adjust the focus to find the objects of interest and different focus levels. The term "multi-view" indicates that the multi-view data comprises several different focus levels originating from the z-stack. It could be considered that the image data is augmented such that the image processing operation on the stack of slide images enables more salient image information to be instantaneously selected, and then presented to a user.

The multi-view data may be considered to be "augmented", for example, by displaying different objects as different EDF images computed using independent numbers of layers from the stack of slide images. The simplest form of multi-view data may, for example, be a 2D image with a first region and a second region originating from different focus layers of a z-stack. In this case, the multi-view data will be instantly perceivable when displayed on screen, without further processing.

However, the multi-view data may comprise complex combinations of layer subsets in different regions of the z-stack, such that it is not possible to view all layer subsets at once, without combining or muting some layers from the final image combination. As such, the multi-view data may also be a multi-dimensional data structure storing image information about many objects of interest in the biological sample.

Thus, in some output formats, the augmented multi-view data will not be immediately viewable as in a simple 2D image, although this is an option. For example, the first object could be represented in an output data structure using an EDF image, an optimum focus image, and/or with various artificial indicators indicating occlusion of a second object located underneath the first object, or all or some of these in combination. The data structure holding the multi-view data can be read by a Graphical User Interface (GUI), to enable cycling through subsidiary and optimum focus images of an object by hovering a mouse cursor over the object in an interactive GUI interface, for example.

Thus, the multi-view data can optionally be interacted with by a user interface device such as a mouse, and is stored in a special data structure comprising separate data fields for separate instantiations of the same object (for example, one data field may contain an optimum view layer of an object, and another data field may contain an EDF image of the same object).

In the following description, the term "biological sample" refers to material obtained from a human, animal, vegetable, or microbiological specimen imaged by a digital microscope system at predetermined focus settings in the field of view of the digital microscope system. For example, the biological sample is a cytology sample, or a liquid biological sample. The biological sample may be a tissue section or stained histology slide.

In the following description, the term "processing unit" refers to a data processor capable of receiving input image information of a biological sample, and performing image processing operations on the input image information as discussed herein, and to output image data as multi-view data. The processing unit may be implemented as a microprocessor, embedded processor, graphics processing unit (GPU), a digital signal processor (DSP), a field programmable gate array (FPGA), a personal computer (PC), or, dependent upon a data connection to a local area network or the Internet, within a server or "cloud" data processing solution.

In the following description, the term "z-stack" refers to a succession of images of the field of view of a biological sample acquired at successively increasing or decreasing focal offsets. As is known to persons skilled in the art, images of different focal offsets may be acquired by moving a sample table supporting a biological sample during image acquisition towards, and away from, a digital microscope lens arrangement. Alternatively or in combination, the focusing optics of the digital microscope lens arrangement may be adjusted to obtain different focal offsets. When the images are aligned with each other laterally, the succession of images forms a z-stack.

In the following description, the term "object" refers to a separable item of interest in the biological sample, sections of which are captured in the z-stack, which a medical professional can advantageously use to perform a medical diagnosis. For example, in a haematoxylin stained image, objects having a haematoxylin intensity above a certain level are assumed to be areas of potential interest. Generally, the object will be distinguishable in the z-stack using one of at least a focus metric (for example, cells will have a sharp boundary at the correct focus level), an edge detection filter, sharpness filter, a colour filter, or a texture filter.

In the following description, the term "lateral location" refers to a location in the 2D plane of a layer of the z-stack, denoting the following application as an *(x,y)* location. The term location embraces areas of the 2D plane as small as an individual pixel. However, the term location also embraces generic 2D areas in a layer of the z-stack attributable to, for example, objects of interest. In other words, a focus filter may optionally be applied for each individual pixel in a slide of the z-stack, or optionally a focus filter may be applied per detected object of interest. The lateral location of a pixel can be defined by its *(x,y)* location compared to the total width and length (in pixels) of the 2D plane of the z-stack. The lateral location of a generic 2D area may be defined, for example, as the *(x,y)* location of the average moment of the shape of the 2D area, as one option.

In the following description, the term "image attribute" refers to a measurable metric which can be calculated from pixels, or locations, in the 2D plane of the z-stack, or across a plurality of adjacent 2D planes of the z-stack. For example, a focus function at a plurality of layers of an object can be calculated from pixels in each layer of a z-stack connected with that object.

Thus, it is a basic idea to detect a plurality (or optionally all) features and objects in the field of view of a biological sample, including along the depth direction. A specific object image of each detected object is created. Multi-view data is provided as a composite image of the field of view by combining the object images dependent on their localisation in depth. As such, if two objects overlap in depth, the composite image (multi-view image) may be formed with the object image of the top object, determined to be the image showing the best contrast for that object along the depth direction of the stack of slide images of the biological object.

Optionally, each object image may be provided as an EDF image, in which case one independently computed EDF image is computed per object of interest in the field of view. A composite image is provided for the user with a selection of these EDFs. Each EDF is characterised by an independently calculated number of layers disposed around the main depth (Z) position of each object.

According to an example, there is provided an apparatus for generating multi-view data of a field of view of a biological sample. The apparatus comprises:
- a processing unit.

The processing unit is configured to obtain a z-s comprising a plurality of slide images of a biological sample, wherein each slide image has been acquired at a predetermined focal offset relative to a depth direction of the biological sample, to determine a first object and a second object in the plurality of slide images, to provide, from the plurality of slide images, a first subset of object layer images of the first object based on a first image attribute of slide images of the first object, to provide, from the plurality of slide images, a second subset of object layer images of the second object based on a second image attribute of slide images of the second object, wherein the layers of the z-stack comprising the first and second subsets of first and second object layer images are provided independently of each other based on the first and second attributes of the first and second objects, respectively, and to form an multi-view data of the field of view of the biological sample comprising at least first and second images, wherein the first image is from the first subset of object layer images and the second image is from the second subset of object layer images.

These and other aspects of the present invention will become apparent from and elucidated with reference to the embodiments described hereinafter.

### BRIEF DESCRIPTION OF THE DRAWINGS

Exemplary embodiments of the invention will be described in the following drawings.
Figure 1 illustrates a plurality of objects located in the same lateral region of a z-stack, but at different depth levels.
Figure 2 illustrates an example of creating an EDF image from a stack of focus planes of a tissue sample.
Figure 3 illustrates schematically an example of the independent determination of a z-stack of two object subsets from a biological sample.
Figure 4 illustrates a method in accordance with a second aspect.
Figure 5 illustrates an example of layer-range estimation of two detected objects in a z-stack.
Figure 6 illustrates a conventionally computed EDF image (right hand side) alongside two EDF views calculated independently in respect of two different objects (left-hand side and centre).
Figure 7 illustrates a data structure for storing multi-view data.
Figure 8 illustrates three graphical user interface examples for viewing multi-view data.
Figure 9 illustrates a schematic showing an algorithm for estimating focus maps and the calculation of multiple EDF values in a set of haematoxylin histology image slides.
Figure 10 illustrates an apparatus in accordance with the first aspect.
Figure 11 illustrates a system in accordance with the third aspect.
Figure 12 illustrates a networked computer system in accordance with the seventh aspect.

### DETAILED DESCRIPTION OF EMBODIMENTS

Digital pathology scanners have a multi-focal capability, and are able to create images of slides at predetermined focus offsets. This technique is used, for example, in cytology, in which objects can have variable thickness. If a feature is located too far away from a single focus plane, important features in the image can be missed.

When viewing images output from such conventional digital pathology systems, it is possible to scroll through different layers of a z-stack acquired by the digital pathology system at different particular fields of view. This is, however, inefficient for a pathologist, who would prefer to be presented with one image that efficiently represents objects of images that need to be recognised to make a diagnosis.

The Extended Depth of Field (EDF) approach creates a single image, with optimised focus at each location of the image, by combining layers of a z-stack. An EDF image is generated by summing pixels imaged from an object at different predetermined focus offsets with the same lateral (*x,y*) coordinates, after having calculated and applied a weight factor to each layer (*z₁, ...,z_{T})* dependent on the local sharpness of the image. This approach is generally applicable in the case of small, distinct, objects that are sharp in one layer and more blurred in adjacent layers.

However, in histopathology (for example), many different features are relevant to the pathologist. There is a large variability of the content of the z-stack. Even though the tissue slices are relatively thin (typically 3-5 µm in thickness), many objects in histopathology images are of a similar size, for example, cell nuclei. The characteristic features of such objects also change noticeably over a distance of a few micro-meters.

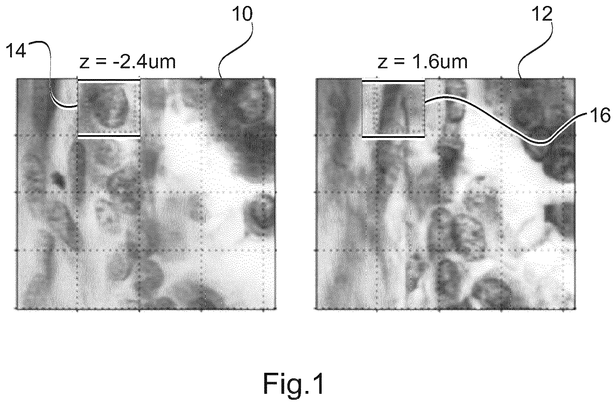

Figure 1 illustrates two adjacent slides 10, 12 of HE-stained tissue, having biological objects of interest located in the same lateral *(x,y)* region 14, 16 of a z-stack, but at different depth levels (focus planes) (z) of a z-stack. As can be seen, in many areas, the definition of the objects is degraded. Creating a single image using the conventional EDF approach (adding-up weighted pixel values), the characteristic appearance of the biological objects would be destroyed, because different biological objects are present at the same lateral position of the z-stack but a different a different depth level. Thus, information from two different biological objects would be combined during the creation of an EDF image.

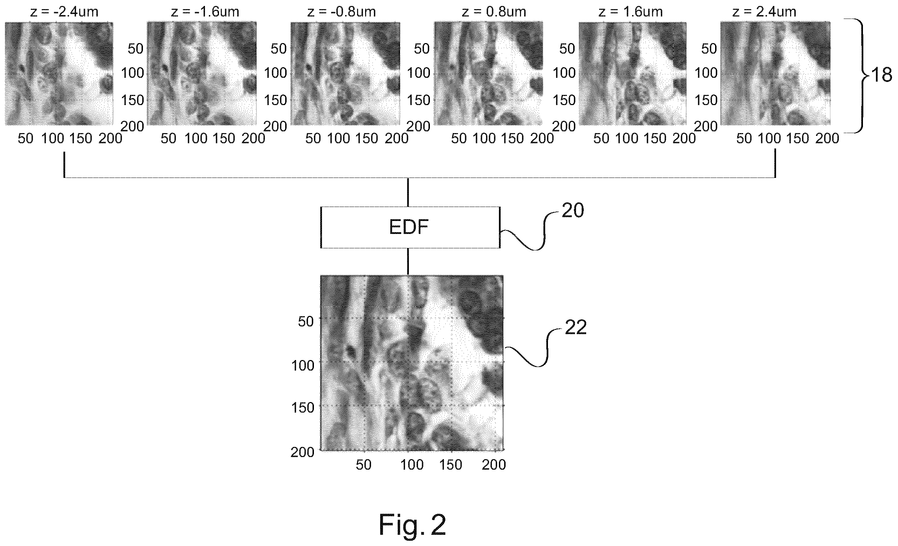

Figure 2 illustrates in the upper row of images 18, six successive slides of HE-stained tissue having progressively increasing focus, taken from a z-stack. At step 20, an EDF image is generated based on the six images. As seen from the output image 22, corpuscles which were distinct at various focus levels of the z-stack in the upper row of images 18 have become more indistinct and superimposed on each other in the output image 22 as a result of the inappropriate application of the EDF algorithm.

Accordingly, a problem with conventional approaches is that it is difficult to apply a EDF weighting function to stacks of images having different objects superimposed in the z direction. The merger of these objects obstructs object recognition by a pathologist, and equally by an image analysis algorithm. A different approach is, therefore, necessary to represent multi-focal tissue images in a convenient way, taking advantage of the rich information present in the multiple layers, as compared to an image with single focal plane.

The approach will be described for ease of presentation firstly according to the second aspect covering the method embodiments. However, it will be understood that the teaching and discussion in relation to the method is also applicable to support subject-matter of the other aspects.

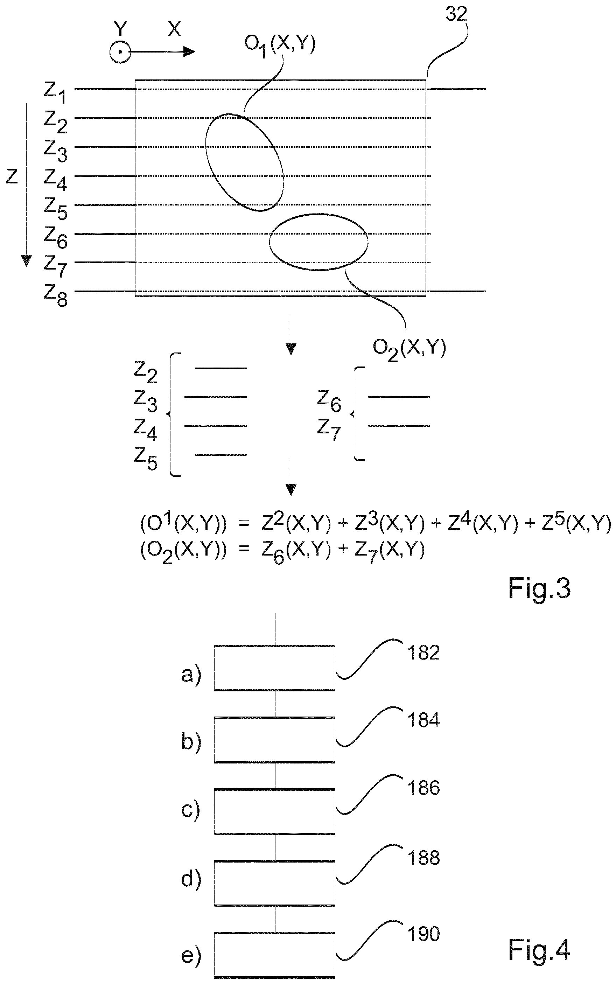

Figure 4 illustrates the method according to the second aspect.

The method for generating multi-view data of a field of view of a biological sample according to the second aspect comprises:
a) obtaining 182 a z-stack comprising a plurality of slide images of a biological sample, wherein each slide image has been acquired at a predetermined focal offset relative to a depth direction (z) of the biological sample;
b) determining 184 a first object and a second object of the plurality of slide images;
c) providing 186, from the plurality of slide images, a first subset of object layer images of the first object based on a first image attribute of slide images of the first object;
d) providing 188, from the plurality of slide images, a second subset of object layer images of the second object based on a second image attribute of slide images of the second object, wherein the layers of the z-stack comprising the first and second subsets of first and second object layer images are provided independently of each other based on first and second attributes of the first and second objects, respectively; and
e) forming 190 multi-view data of the field of view of the biological sample comprising at least first and second images, wherein the first image is from the first subset of object layer images and the second image is from the second subset of object layer images.

Optionally, a portion of the first object and the second object overlap along the depth direction (z).

Figure 3 illustrates an application of the method according to the second aspect. A biological sample 32 is imaged by a digital microscope at a plurality of depth settings Z₁,...,Z₈ in a depth direction Z. Lateral directions *(x,y)* of the biological sample are defined according to the *(x,y)* arrows of Figure 3 (into the page). Such imaging creates a z-stack as a computer data structure containing a sequence of digital images of a biological sample acquired at different focal lengths. Each depth layer Z_{N} corresponds to a different focal depth setting. The focal lengths may vary during acquisition, for example, by adjusting an objective lens of a digital microscope, or by adjusting the height of sample table, or both.

Of course, the step of obtaining 182 a z-stack comprising a plurality of images may instead comprise loading pre-acquired computer data containing a digital representation of a z-stack into a computer implemented processing means. Optionally, the step of obtaining 182 a z-stack comprising a plurality of images may comprise operating a digital microscope with variable depth to image a biological sample at a plurality of positions.

A typical biological sample (for example, a smear sample) is a 3D object, such that objects located at different depths in the biological sample move into focus, and out of focus, as the focal length of acquisition of the digital microscope's field of view is varied.

Furthermore, independent objects located at different depths in the biological sample may be stacked on top of each other such that they are occluded, or partially occlude each other. Furthermore, the layers of such stacked objects may be combined to create, for example, an EDF image. In the illustrated biological sample 32 of Figure 3, a first object O₁ and a second object O₂ in the biological sample are illustrated, with the first object O₁ located above the second object O₂ in the depth direction, and with the right hand side of the first object O₁ partially occluding the left-hand side of the second object O₂ (if viewed from the top of the z-stack looking down in the Z direction).

The first object O₁ spans a depth in the biological object 32 spanning four depth layers: Z₂, Z₃, Z₄, and Z₅. The second object O₂ spans a depth in the biological object 32 spanning two depth layers: Z₆, and Z₇.

The step of determining a first object O₁ and/or a second object O₂ in the z-stack acquired of the biological object 32 is performed by digital image processing.

In one exemplary approach, the determination is performed by a 2D segmentation applied successively to each layer of the z-stack in the Z direction. A link is then made between regions in adjacent slide images having matching segmented regions which are on top of each other or underneath each other in the Z direction, optionally within a tolerance. The plurality of slide images has been acquired with respect to the same lateral spatial relationship (each slide image of the plurality of slide images is aligned), it is possible to identify segmented regions of successive slide images belonging to the same object.

Optionally, object detection can be based on machine learning algorithms that have been trained to recognize certain objects based on appearance. This technique can be applied to each layer followed by the steps described above. Optionally, a pixel-wise object detection is performed, wherein an object is defined as a position with a maximum in the focus function, for example.

Optionally, the segmentation is texture based, focus-based, sharpness based, contrast-based, or based on a wide variety of other image-processing segmentation techniques.

Applying the determination step 184 to an entire plurality of slide images of a typical biological sample could result in the generation of tens of thousands of object images. For the present purposes, the determination of two objects is illustrated.

The step of providing 186 a first subset of object layer images of the first object involves searching in the images of the z-stack for regions of each slide image of the plurality of slide images that are associated with the first object. A first image attribute relevant to the first object may be used to recognise regions of each slide image of the plurality of slide images defining the first object O₁. As an example, the first image attribute may be a difference in texture and/or a difference in colour of a region of the slide images.

As an example, the first subset of object layer images may be provided by applying the same filter for segmentation across all layers, enabling all objects to be detected. Then, the overlap of objects in the lateral direction is checked. Objects having a common x-y (2D) overlap in the lateral direction are defined as being part of the same 3D object. Then, a focus function is established to identify the best image layer, and optionally a range of adjacent layers, that can be used for creating an EDF image of the object.

The step 186 of providing first subset object layer images is illustrated in figure 3 with the first subset of object layer images of the first object *O*₁ ∈ {*Z*₂(*x*₂, *y*₂),*Z*₃(*x*₃, *y*₃), *Z*₄(*x*₄, *y*₄), *Z*₅(*x*₅, *y*₅)}. This notation indicates that the first subset *O*₁ of object images comprises an arbitrary image region (*x_{N},y_{N}*) in each layer *Z_{N}* corresponding to a "slice" through a first object of interest in that layer. The arbitrary image region (*x_{N}, y_{N}*) at each layer is a 2D area.

The step of providing 188 from the plurality of slide images, a second subset O₂ of object layer images of the second object based on a second image attribute of slide images of the second object is illustrated in Figure 3 with the second subset of object layer images of the second object *O*₂ ∈ {*Z*₆(*X*₆, *y*₆), *Z*₇(*x*₇, *y*₇)}*.*

Optionally, the first image attribute and the second image attribute are of the same type. In other words, in one embodiment the first and second objects of interest in the z-stack 32 are detected using the same metric, such as a combination of texture and colour.

Optionally, the first image attribute and the second image attribute are of different types. For example, a first object could be detected based on texture recognition, and a second object could be detected based on colour recognition.

When using machine learning algorithms with feature vectors, different objects can be detected with different vectors, for example, which relate to different cell types. If the image is of an immune-stained slide, then the different objects can be distinguished in the same way, but the objects labelled as being positive for the staining or negative based on colour.

The feature vectors defining an object can be established implicitly by a neural network algorithm that has been trained to recognize such objects.

Accordingly, it will be noted that the first subset of object layer images and second subset of object layer images are provided independently of each other. In other words, the first object O₁ extends across four layers of the z-stack, and thus the first subset of object layer images will comprise four object layer sub-images, regardless of the determination of the size of the second subset of second object layer images.

As such, a typical output of the present algorithm is a plurality of subsets of object layer images, each comprising one or more layer images.

The formation 190 of the multi-view data of the field of view of the biological sample 32 involves utilising the plurality of subsets of object layer images in many different ways to enable useful information about the biological sample to be provided. In one option, the optimum focus layer of each of the first and second object layer images can be displayed at the relevant lateral *(x,y)* first and second locations of an output image, with areas not associated with the first and second object layer images being interpolated. However, the multi-view data obtained using the method according to the second aspect can be combined, selectively muted and displayed in many ways, as will be described below.

In summary, a local determination of the lateral and vertical position of objects of interest in a z-stack is made. Then, a series of images for such each of the objects of interest is generated. The images are optionally conventional 2D representations ("cut-outs") of one layer of each object, such as an optimum layer of each object. In this case, the final image is assembled by interpolating the 2D representations of each object. Optionally, the images area combination of layers associated with the objects of interest. Alternatively, or in combination, the images may be Extended Depth of Field images.

The output of the method is optionally multi-view data (a data structure), formatted to contain object image data which can be displayed to a user (via a user interface, for example). It will be appreciated that the multi-view data may comprise a wide variety of data types, configurable at run-time by the user or according to standard settings.

For example, in a case with two objects in the original z-stack, each containing an object visible in a plurality of layers, the multi-view data could comprise (i): EDF images of the first and second object, (ii) an EDF image of the first object but a single, optimum layer image of the second object, (iii) EDF images and optimum layer images of both the first and second objects. The lateral regions of the image in-between detected objects would be interpolated, or contain a combination of all layers, or a plurality of layers, for example.

The multi-view data may optionally comprise the original raw layer images. In this case, although there would be no memory storage advantage, the raw layer images could be browsed by a user in a user interface, and the improved object images such as EDF images could be presented interactively with lower latency, because the EDF images of the objects would have been pre-computed.

The first and/or second attributes may optionally be computed pixel-wise, or object-wise. As an example, the first and/or second attributes could be provided as a focus function defining the level of focus of a single pixel at a lateral location, or the focus level of the entire object.

According to an embodiment of the second aspect, the method further comprises:
b1) determining a focus function along a depth direction of the z-stack at a plurality of lateral locations of the z-stack as the first and second image attributes of the first and second objects, respectively;
d1) determining an optimum object layer image of each of the first and/or second subsets of object layer images as one of either the first and/or second object layer images having a maximized focus function along the depth direction; and
e1) forming the multi-view data as comprising the first and/or second optimum object layer images.

Accordingly, the local point of interest (in the layer, or range of layers) is based on an assessment of a local focus parameter, such as a sharpness parameter, of each layer. A focus graph is created and analysed for each *(x,y)* position, to find local maxima. The points of interest or objects are determined based on these detected local maxima.

The optimum object layer image may, for example, be the layer region member of the subset of object layer images having the highest number of pixels above a focus threshold.

Optionally the local range of layers is combined in a local extended depth of field value in each *(x,y)* position. In this case, the detected local maxima will correspond to the central position of every local range of layers for an EDF view.

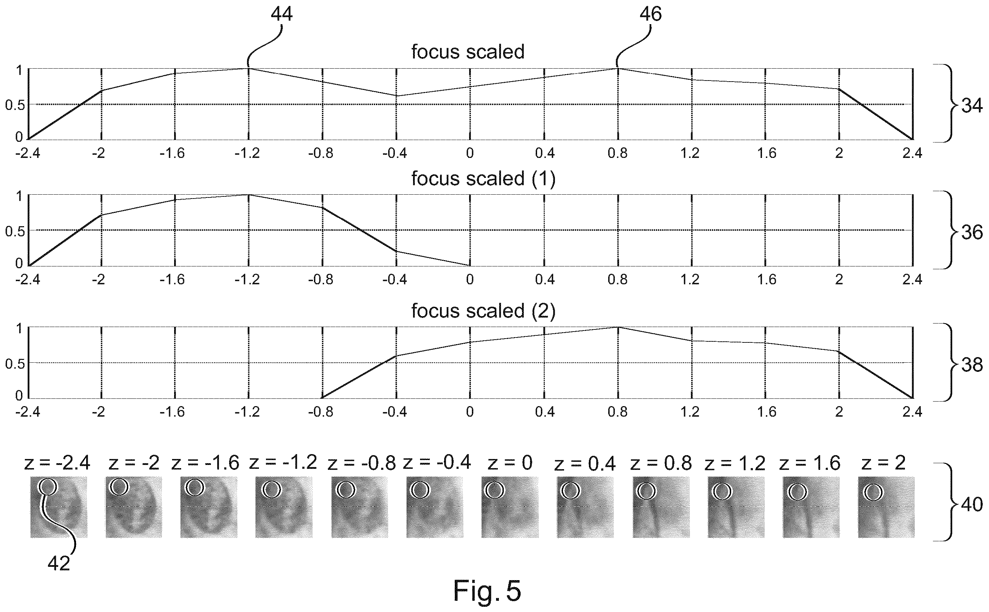

Figure 5 illustrates an example of layer-range estimation of two detected objects. The first row 34 shows the focus curve along the Z axis for an arbitrary *(x,y)* position marked with a circle 42 in the image representations in the lower row 40. At the illustrated *(x,y)* position of the z-stack, the variation in the focus function can be seen as the scaled focus factor (x-axis) is varied.

In this case, two focus maxima are detected at Z = -1.2, and Z = 0.8, implying that two objects are present in the Z direction of the z-stack at the arbitrary (*x,y*) position illustrated. If the slide layers for the second detected object are muted (removed from the total image) the result is the second row 36, which shows the focus curve for the first detected object. If the slide layers for the first detected object are muted, the result is the third row 38, in which the second detected object is illustrated.

Locations 44 and 46 (maxima) indicate points of interest according to this embodiment which will be included in composite views. In this example, this means that the final multi-view data will comprise, at the arbitrary *(x,y)* position, two final views at Z = -1.2, and Z = 0.8 representing the overall 13 focal plane images. If the arbitrary *(x,y)* position at a different portion of the z-stack images 40 revealed the presence of three objects of interest with three maxima, then that portion of the z-stack images would be represented in the multi-view data with three final views representing the 13 focal plane images.

According to an embodiment of the second aspect, the total number of optimum object layer images corresponds to the total number of maxima in the focus functions at a plurality of lateral locations of the z-stack.

According to an embodiment of the second aspect, the method further comprises:
d2) determining a plurality of subsidiary first and/or second object layer images as object layer images above, and/or below the optimum object layer image in the z-stack having focus functions which are smaller compared to the focus function of the optimum object layer image;
e2) providing one or more of the subsidiary first and/or second object layer images as a portion of the multi-view data of the field of view of the biological sample.

Referring to Figure 5, it is optionally possible to threshold the focus function (as illustrated in graph 34, for example) to enable the detection of a plurality of object layer images. Although subsidiary first and/or second object layer images could conceivably have a lower focus function than the optimum object layer image, the subsidiary first and/or second object layer images still contain energy associated with first and/or second objects in the z-stack, and could help to resolve ambiguity in the image.

Accordingly, in embodiments discussed above, the number of specific images (or views) is chosen equal to the maximum number of local points of interest determined in the focus graphs. Optionally, for each view, points of interest are combined in the same order from the highest to the lowest focus layer. In every area that requires less than the maximum number of views, the pixel values may be shared between the adjacent views.

A user can scroll, or switch, between the different views as in the original layer stack, but with the advantage of having fewer layers, and an optical image quality in every area of each view. At the boundaries between different areas, pixel values can be interpolated in a particular way, to avoid stitching artefacts. Optionally, one view of the z-stack can be chosen as the reference image, and additional images are displayed only in those areas where available.

As an example, when two views are to be created, those positions which have less than two points of interest will be shared between the two views. Optionally, in areas where there are two objects of interest, the top object of interest will always be used for the top view, and the bottom one for the bottom view.

According to an embodiment of the second aspect, the method further comprises:
d3) generating an Extended Depth of Field (EDF) image of the first and/or second object based on the first and/or second subset of object layer images;
e3) forming the multi-view data of the field of view biological sample, wherein the first and/or second objects are presented as Extended Depth of Field (EDF) images composed of the first and/or second object layer images.

Accordingly, a focus stacking algorithm, for example, is applied to the plurality of slide images comprised in the first and/or second subset of object layer images. It is thus possible to compute an EDF image for the first and/or second objects in the z-stack. Of course, because the first and second subsets of first and second object layer images are provided independently of each other, the EDF images are also independent of each other. Therefore, EDF images for first and second respective object layer images are provided using an intelligent selection of z-stack layers.

According to an embodiment of the second aspect, the pixel values of lateral positions between the Extended Depth of Field (EDF) images of the first and/or second objects are interpolated. By creating EDF images at first and second points of interest, and interpolating the spaces in between, stitching artefacts can be reduced.

According to an embodiment of the second aspect, the method further comprises:
d4) generating a laterally interpolated image by interpolating the pixel values between adjacent first and second object layer images in the lateral direction; and
e4) providing the laterally interpolated image as a portion of the multi-view data of the field of view of the biological sample.

According to an embodiment of the second aspect, the method further comprises:
c1) identifying at least a second object in the z-stack in the depth direction of the z-stack; and
e5) forming the multi-view data of the field of view of the biological sample as comprising both the first and the second objects, wherein the first and the second objects are (i) provided as independent first and second Extended Depth of Field (EDF) views of the first and second objects, or (ii) wherein the optimum object layer image of the first and second objects are provided.

Thus, the flexibility of the outlined technique is that a variety of display options may be provided in the multi-view data.

An aspect of the method according to the second aspect is the local determination of positions within an area or pixel of interest in each layer. From those layers, an optimum centre layer is selected for each position.

Such local areas of interest can be determined in many different ways. For example, a sharpness filter based on the greyscale intensity value, or a colour channel obtained from a colour-decomposed image for every pixel, or only for pixels having an intensity above a certain intensity threshold.

The determination of a region of interest (window) around a position for the calculation of a focus value can be carried out for each (*x,y*) position, or for a group of pixels. Sharpness filters can be based on an entropy measure, a Gaussian filter, or other measures. The window size around the pixel or area of interest can have different sizes, for example plus or minus 4, 5, or 6 pixels in the x or y direction.

According to an embodiment of the second aspect, determining the first and/or second object in the plurality of slide images of the z-stack comprises applying a sharpness filter, an edge filter, a contrast filter, or a focus function to images in the plurality of slide images, wherein the sharpness, edge, and contrast filters optionally operates on a grayscale value, a colour channel value, or an intensity threshold value of pixels of the plurality of slide images, to provide the first and/or second image attributes.

According to an embodiment of the second aspect, the method further comprises:
f) displaying the multi-view data of the field of view biological sample on a user interface of a user display.

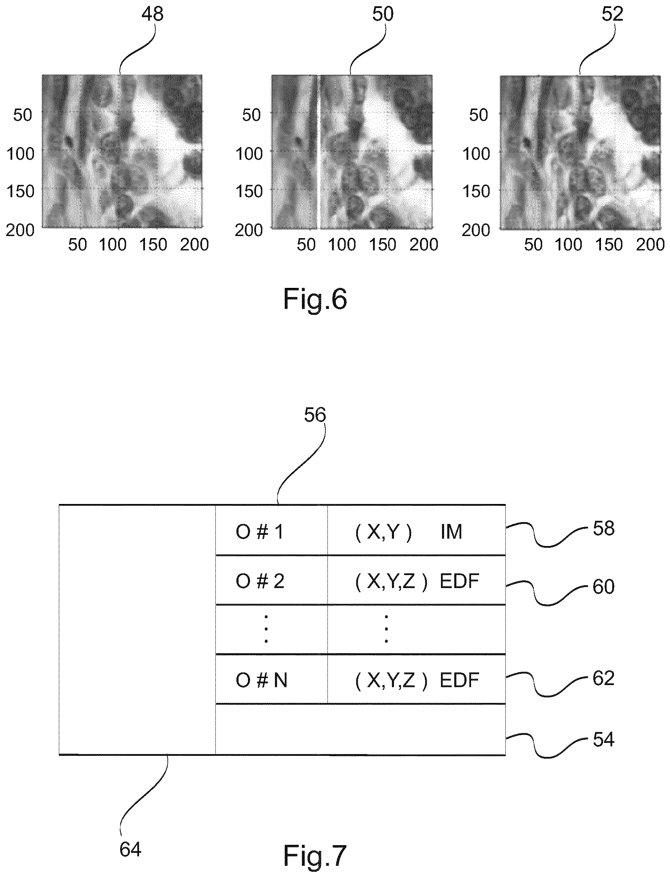

Figure 6 illustrates comparative examples of the technique according to the present approach. Image 48 shows a first EDF, and image 50 shows a second EDF obtained according to the method according to the second aspect. A conventional EDF is shown at image 52. In the image of the conventional EDF 52, all layer images are combined together, regardless of whether or not they refer to regions of first and second objects superimposed in the depth direction. In contrast, the first 48 and second 50 EDF images according to the second aspect appear to be less blurred, because objects from different layers of the image stack do not merge with each other during the generation of the EDF image.

Figure 7 illustrates a computer data structure suitable for storing, and transmitting multi-view data obtained according to the second aspect. The computer data structure is suitable for storing on storage means, such as a hard disk drive, USB stick, ROM or EEPROM memory, and other such memory storage techniques. The exemplary data structure has a plurality of object data records 56, representing independently calculated objects in a z-stack. Object number one in a first object data record 58 is a conventional two-dimensional image at one z-stack position. Object number two in a second object data record 60 and object number N in a third object data record 62 represent EDF images computed for independent objects in the z-stack. Fourth object data record 64 comprises interpolated information in between object images. Fifth object data record 54 provides meta data of the computer data structure for storing multi-view data. Of course, many different arrangements of a computer data structure in accordance with the invention can be provided.

According to an embodiment of the second aspect, the method further comprises:
displaying (i) a schematic menu illustrating a detected object and its identified focus layers in the z-stack, and (ii) a field of view display window.

The schematic menu enables a user to select a layer of the object of interest from the schematic menu, and multi-view data of the field of view biological sample is displayed in the field of view display window incorporating the layer of the object selected by the user.

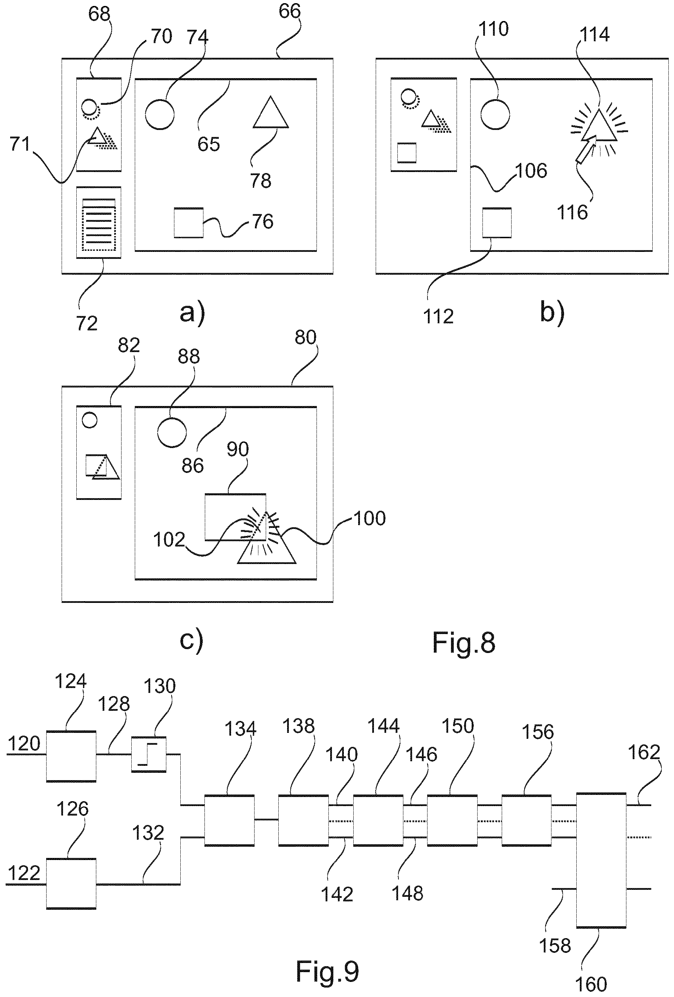

Figure 8 illustrates some display options according to an embodiment. A similar processing chain is applicable to many other staining formats.

In Figure 8a), there is shown an output display 66 (such as a computer monitor) configured to display a region of multi-view data record as an image. This is conventionally displayed as a top-down view through a notional stack of slide images 65 (although a bottom-up view, or a selection of slide layers could also be displayed). The Graphical User Interface (GUI) comprises a thumbnail preview screen 68 in which the circular object 70 is shown having a second optional display layer (dotted line) underneath the optimum display layer. The triangular object 71 is shown with three subsidiary display layers. The user may move the mouse cursor over the thumbnail screen 68, or select layers from the drop-down menu 72. Upon making a selection, the appropriate circular layer is provided on the screen at 74, and the appropriate triangular layer is provided on screen at 78. Optionally, the circular object 74 and/or the triangular object 78 may be EDF images.

In Figure 8b), a dynamic form of image display is illustrated having a first object of interest 110 and a second object of interest 112 displayed as static layers in the display screen 106. The object 114 scrolls through all of its possible layers provided in the multi-view data with a separation of, for example, one second (illustrated with the blinking effect in Figure 8b)). As such, a selection of layer information held in the multi-view data may be presented to a user automatically.

In Figure 8c), a situation is shown where the triangular object 100 is partially occluded by the rectangular object 90. The GUI may enable a user to remove the layer of the z-stack displaying either the rectangular object 90, or the triangular object 100.

In other words, the multiple view representation of multilayer scans can be displayed simply by placing the multiple views on top of each other, and letting the user to toggle between them. Optionally, only areas with superimposed objects change when toggling, allowing the user to easily see those areas. Optionally, additional annotation can be provided to indicate those areas. Optionally, every view can represent a local EDF, with a locally determined range of layers used as input for the EDF. Optionally, a selected layer may be selected as being the best representation.

Figure 9 illustrates a specific implementation example for a haematoxylin and eosin (H&E) application.

In figure 9, input images are applied to a colour deconvolution module 124 and thresholded 130 to provide a haematoxylin channel 128. In parallel, an RGB to HSV function is applied to give a value channel 132. Both channels are input into a focus filter 134, following which focused peaks along the Z direction of the image stack are detected using peak detector 138. A plurality of detected peaks 140 to 142 are scaled in focus using the scaling means 144. This results in the output of a range of focus maps 146 to 148. A sigmoid function 150 is applied to the range of focus maps 146 to 148, and an interpolator 156 interpolates areas without peaks in the focus function. Finally, EDF weights are computed for each EDF object, and a weighted sum 160 of layers is performed to generate the EDF images which are output at 162.

In operation, colour deconvolution is applied to extract the haematoxylin channel. The haematoxylin image is thresholded to select those regions where the haematoxylin intensity is above a certain level. These are thus assumed to be areas of potential interest. The focus filter 134 is applied to the brightness (value) channel of the image to calculate a local focus on value, which is then plotted as a function of Z each XY position and normalised. The local number of viewing claims in the z-stack is derived from number of maximum of that function. Each maximum is called object in this connotation.

To find the maxima in the focus curve, a filter is applied that selects the maximum of the curve inside a sliding window. Points where the input is identical to the output of the maximum filter will be selected as maxima. The range of layers used for calculating the EDF values is derived for each object from the shape of the curve around maximum - for example, all layers with a focus value that is larger than half of the maximum value.

According to a first aspect, there is provided an apparatus for generating multi-view data of a field of view of a biological sample. An apparatus 26 for generating multi-view data of a field of view of a biological sample is provided. The apparatus comprises:
- a processing unit 28.

The processing unit 28 is configured to:
obtain a z-stack comprising a plurality of slide images of a biological sample, wherein each slide image has been acquired at a predetermined focal offset relative to a depth direction z of the biological sample;
to determine a first object and a second object of the plurality of slide images;
to provide, from the plurality of slide images, a first subset of object layer images of the first object based on a first image attribute of slide images of the first object;
to provide, from the plurality of slide images, a second subset of object layer images of the second object based on a second image attribute of slide images of the second object, wherein the layers of the z-stack comprising the first and second subsets of first and second object layer images are provided independently of each other based on the first and second attributes of the first and second objects, respectively; and
to form multi-view data of the field of view of the biological sample comprising at least one image from the first and/or second subsets of object layer images.

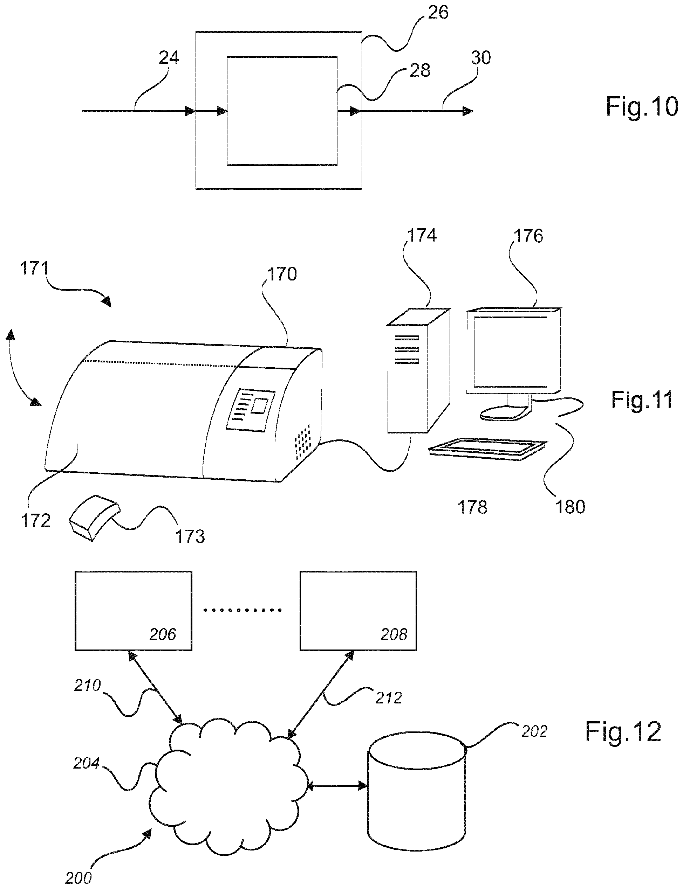

Figure 10 illustrates an example of an apparatus in accordance with the first aspect.

According to a third aspect, there is provided a system for generating multi-view data of a biological sample. The system comprises:
- an apparatus 174 in accordance with the first aspect or its embodiments; and
- a user display 176.

The apparatus 174 is configured receive a z-stack comprising a plurality of slide images of a biological sample, and to display multi-view data of the field of view of the biological sample on the user display.

Figure 11 illustrates an example of a system having an apparatus 174 and a user display 176 in accordance with the second aspect.

Optionally, the system may also comprise a microscope scanner 170 (a multifocal digital microscope) with a removable lid 172 configured to receive a number of pathology cartridge 173 containing samples for analysis. Over a duration of time, the sample cartridge 173 undergoes a multifocal scan. Information is output to a control apparatus 174, which processes the multifocal scan information according to a method of the second aspect, or its embodiments. Optionally, display screen 176, and keyboard interface 178 with mouse interface 180 enable a user to browse the multi-view data generated.

According to an example, there is provided a system 171 for generating multi-view data of a biological sample comprising:
- a microscope scanner 170; and
- an apparatus 26 in accordance with the first aspect.

The microscope scanner is configured to scan a biological sample at a plurality of lateral positions and a plurality of predetermined focal offsets, and to provide a stack of captured and aligned images to the processing unit 28, to thus generate multi-view data of a field of view biological sample.

Optionally, the microscope scanner can provide an auto-focus function or a focus map as a reference focal offset as part of the plurality of predetermined focal offsets.

According to a fourth aspect, there is provided a computer program element for controlling an apparatus according to the first aspect which, when executed by a processing unit, is configured to carry out the method of the second aspect.

According to a fifth aspect, computer readable medium having stored the computer program element of fourth aspect.

According to a sixth aspect, there is provided a computer data structure comprising multi-view data of a field of view of a biological sample comprising first and/or second images at a first lateral position generated in accordance with the method of second aspect.

A computer program element might therefore be stored on a computer unit, which might also be an embodiment of the present invention. This computing unit may be adapted to perform or induce performance of the steps of the method described above. Moreover, it may be adapted to operate the components of the above-described apparatus. The computing unit can be adapted to operate automatically and/or to execute orders of a user. A computer program may be loaded into a working memory of a data processor. The data processor may thus be equipped to carry out the method of the invention.

This exemplary embodiment of the invention covers both the computer program that has the intervention installed from the beginning, and a computer program that by means of an update turns an existing program into a program that uses the invention.

According to a seventh aspect of the invention, there is provided a networked computer system 200. The system comprises:
- a server device 202;
- a client device 206; and
- a communications network 204 configured to provide data communication between the server device and the client device.

The server device is configured to perform the steps of the method according to the second aspect, or its optional embodiments.

The server device is configured to transmit the multi-view data of the field of view of the biological sample to the client device.

The client device is configured to receive the multi-view data of the field of view of the biological sample received from the server device.

Optionally, the client device is configured to generate and to display a graphical user interface comprising at least one image from the first and/or second subsets of object layer images sample received from the server device.

Presently, there is increased interest in providing "Software as a Service" ("SaaS"). According to the seventh aspect, raw slide data may be uploaded to a web service (sometimes referred to as a "cloud server"), such as "Microsoft Azure TM" or "Amazon Web Services TM". As part of a biological sample image processing service, the slide images would initially be obtained in a laboratory. The slide images are then uploaded to the server device via a Wide Area Network, using an internet connection.

Alternatively, the slide images could be uploaded to a "PACS" system or local hospital server over a Local Area Network. Of course, the slide images could be saved on physical media such as a Digital Versatile Disk (DVD), a tape drive, or a USB stick and physically sent to a location hosting the server, where the physical media could be loaded onto the server.

Then, the slide images are processed according to the second aspect, or its optional embodiments. The multi-view data of the field of view of the biological sample is then transmitted to a client device for use, for example by a graphical user interface capable of interpreting the multi-view data. Optionally, the multi-view data is interpreted into a display format (such as .JPG, .GIF, or another imaging format) on the server, and the GUI display of the multi-view data is transmitted to the client (an example of a "web-based application").

Fig. 12 illustrates a networked computer system 200. A server device 202 is connected to a client device 206 via a Wide Area Network 210 or a Local Area Network 212 connected, for example, to a communications network 204 such as the internet. Optionally a plurality of client devices 206, 208 may be connected.

A computer program may be stored and/or distributed on a suitable medium, such as optical storage media, or a solid state medium supplied together with, or as a part of other hardware, but may also be distributed in other forms, such as via the Internet or other wired or wireless telecommunication systems. However, the computer program may also be presented over a network like the World Wide Web, and can also be downloaded into the working memory of a data processor from such a network. The image processing method according to the second aspect would then be performed on the

According to a further exemplary embodiment of the present invention, a medium for making a computer program element available for downloading is provided, which computer program element is arranged to perform a method according to one of the previously described embodiments of the invention.

It should to be noted that embodiments of the invention are described with reference to different subject-matters. In particular, some embodiments are described with reference to method-type claims, whereas other embodiments are described with reference to device-type claims. However, a person skilled in the art will gather from the above, and the following description that, unless otherwise notified, in addition to any combination of features belonging to one type of subject-matter, also other combinations between features relating to different subject-matters is considered to be disclosed with this application.

All features can be combined to provide a synergetic effect that is more than the simple summation of the features.

While the invention has been illustrated and described in detail in the drawings and foregoing description, such illustration and description are to be considered illustrative or exemplary, and not restrictive. The invention is not limited to the disclosed embodiments.

Other variations to the disclosed embodiments can be understood, and effected by those skilled in the art in practicing the claimed invention, from a study of the drawings, the disclosure, and the dependent claims.

In the claims, the word "comprising" does not exclude other elements or steps, and the indefinite article "a" or "an" does not exclude a plurality. A single processor, or other unit, may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. An apparatus (26) for generating multi-view data of a field of view of a biological sample, comprising:
- a processing unit (28)
wherein the processing unit is configured to:
obtain a z-stack comprising a plurality of slide images of a biological sample, wherein each slide image has been acquired at a predetermined focal offset relative to a depth direction (z) of the biological sample;
determine a first object and a second object of the plurality of slide images,
provide, from the plurality of slide images a first subset of object layer images of the first object, based on a first image attribute of slide images of the first object;
provide, from the plurality of slide images a second subset of object layer images of the second object based on a second image attribute of slide images of the second object;
wherein an object layer image in the respective first or second subsets comprises an image region of a slide image corresponding to a slice through the first or second objects;
wherein the layers of the z-stack comprising the first and second subsets of first and second object layer images are provided independently of each other based on the first and second attributes of the first and second objects, respectively; and
process the first subset of first object layer images for creating a first object image in accordance with predefined focus characteristics for improving image acuity;
process the second subset of second object layer images for creating a second object image in accordance with predefined focus characteristics for improving image acuity,
form multi-view data of the field of view of the biological sample comprising at least the first and the second object images.

2. The apparatus (26) according to claim 1, wherein the processing unit (28) is further configured to:
determine a focus function along a depth direction of the z-stack at first and second lateral locations of the z-stack as the first and second image attributes of the first and second objects, respectively; and
determine an optimum object layer image of each of the first and/or second subsets of object layer images as one of either the first and/or second object layer images having a maximized focus function along the depth direction; and
to form the multi-view data as comprising the first and/or second optimum object layer images.

3. The apparatus (26) according to claim 2,
wherein the total number of optimum object layer images corresponds to the total number of maxima in the focus functions at a plurality of lateral locations of the z-stack.

4. The apparatus (20) according to claims 2 or 3, wherein the processing unit (28) is further configured:
to determine a plurality of subsidiary first and/or second object layer images as object layer images above, and/or below the optimum object layer image in the z-stack having focus functions which are smaller compared to the focus function of the optimum object layer image; and
to provide one or more of the subsidiary first and/or second object layer images as a portion of the multi-view data of the field of view of the biological sample.

5. The apparatus (26) according to one of the preceding claims, wherein the processing unit (28) is further configured:
to generate an Extended Depth of Field (EDF) image of the first and/or second object based on the first and/or second subset of object layer images; and
to form the multi-view data of the field of view biological sample, wherein the first and/or second objects are presented as Extended Depth of Field (EDF) images composed of the first and/or second object layer images.

6. The apparatus (26) according to claim 5, wherein the processing unit (28) is further configured:
to generate a laterally interpolated image by interpolating the pixel values between adjacent first and second object layer images in the lateral direction; and
to provide the laterally interpolated image as a portion of the multi-view data of the field of view of the biological sample.

7. The apparatus (26) according to one of the preceding claims,
wherein determining the first and/or second object in the plurality of slide images of the z-stack comprises applying a sharpness filter, an edge filter, a contrast filter, or a focus function to images in the plurality of slide images, wherein the sharpness, edge, and contrast filters optionally operates on a grayscale value, a colour channel value, or an intensity threshold value of pixels of the plurality of slide images, to provide the first and/or second image attributes.

8. The apparatus (26) according to one of the preceding claims, further configured:
to display the multi-view data of the field of view of a biological sample on a user interface of a user display.

9. The apparatus (26) according to claim 8, wherein the apparatus is further configured to provide, on the user display:
(i) a schematic menu illustrating a detected object and a plurality of identified focus layers of the detected object in the z-stack, and (ii) a field of view display window,
wherein the schematic menu enables a user to select a layer of the object of interest from the schematic menu, and multi-view data of the field of view biological sample is displayed in the field of view display window incorporating the layer of the object selected by the user.

10. A computer-implemented method for generating multi-view data of a field of view of a biological sample, comprising:
a) obtaining (182) a z-stack comprising a plurality of slide images of a biological sample, wherein each slide image has been acquired at a predetermined focal offset relative to a depth direction (z) of the biological sample;
b) determining (184) a first object and a second object of the plurality of slide images in the plurality of slide images;
c) providing (186), from the plurality of slide images, a first subset of object layer images of the first object based on a first image attribute of slide images of the first object;
d) providing (188), from the plurality of slide images, a second subset of object layer images of the second object based on a second image attribute of slide images of the second object;
wherein an object layer image in the respective first or second subsets comprises an image region of a slide image corresponding to a slice through the first or second objects;
wherein the layers of the z-stack comprising the first and second subsets of first and second object layer images are provided independently of each other based on first and second image attributes of the first and second objects, respectively;
processing the first subset of first object layer images for creating a first object image in accordance with predefined focus characteristics for improving image acuity;
processing the second subset of second object layer images for creating a second object image in accordance with predefined focus characteristics for improving image acuity; and
e) forming (190) multi-view data of the field of view of the biological sample comprising at least the first and the second object image.

11. The method according to claim 10, further comprising:
f) displaying the multi-view data of the field of view of a biological sample on a user interface of a user display.

12. A system for generating multi-view data of a biological sample comprising:
- an apparatus (26) in accordance with one of apparatus claims 1 to 9; and
- a user display;
wherein the apparatus is configured receive a z-stack comprising a plurality of slide images of a biological sample, and to display multi-view data of the field of view of the biological sample on the user display.

13. A computer program element for controlling an apparatus according to one of claims 1 to 9 which, when executed by a processing unit, causes the processing unit to carry out the method of claim 10.

14. A computer readable medium having stored the computer program element of claim 13.

15. A networked computer system (200), comprising:
- a server device (202);
- a client device (206); and
- a communications network (204, 210) configured to provide data communication between the server device and the client device;
wherein the server device is configured to perform the steps of claim 10, and the server is configured to transmit the multi-view data of the field of view of the biological sample to the client device; and
wherein the client device is configured to receive the multi-view data of the field of view of the biological sample received from the server device.

## Patentansprüche

1. Einrichtung (26) zur Erzeugung von Mehransichtsdaten eines Sichtfeldes einer biologischen Probe, umfassend:
- eine Verarbeitungseinheit (28),
wobei die Verarbeitungseinheit konfiguriert ist zum:
Erhalten eines z-Stapels, der eine Vielzahl von Objektträgerbildern einer biologischen Probe umfasst, wobei jedes Objektträgerbild mit einem vorbestimmten Fokusversatz relativ zu einer Tiefenrichtung (z) der biologischen Probe aufgenommen wurde;
Bestimmen eines ersten Objekts und eines zweiten Objekts aus der Vielzahl von Objektträgerbildern,
Bereitstellen einer ersten Teilmenge von Objektschichtbildern des ersten Objekts aus der Vielzahl von Objektträgerbildern, basierend auf einem ersten Bildattribut von Objektträgerbildern des ersten Objekts;
Bereitstellen einer zweiten Teilmenge von Objektschichtbildern des zweiten Objekts aus der Vielzahl von Objektträgerbildern, basierend auf einem zweiten Bildattribut von Objektträgerbildern des zweiten Objekts;
wobei ein Objektschichtbild in der jeweiligen ersten oder zweiten Teilmenge einen Bildbereich eines Objektträgerbildes umfasst, der einem Schnitt durch das erste oder zweite Objekt entspricht;
wobei die Schichten des z-Stapels, die die erste und zweite Teilmenge der ersten und zweiten Objektschichtbilder umfassen, unabhängig voneinander basierend auf dem ersten und zweiten Attribut des ersten bzw. zweiten Objekts bereitgestellt werden; und
Verarbeiten der ersten Teilmenge von ersten Objektschichtbildern zur Erzeugung eines ersten Objektbildes in Übereinstimmung mit vordefinierten Fokuseigenschaften zur Verbesserung der Bildschärfe;
Verarbeiten der zweiten Teilmenge von zweiten Objektschichtbildern zur Erzeugung eines zweiten Objektbildes in Übereinstimmung mit vordefinierten Fokuseigenschaften zur Verbesserung der Bildschärfe,
Bilden von Mehransichtsdaten des Sichtfelds der biologischen Probe, die mindestens das erste und das zweite Objektbild umfassen.

2. Einrichtung (26) nach Anspruch 1, wobei die Verarbeitungseinheit (28) weiter konfiguriert ist zum:
Bestimmen einer Fokusfunktion entlang einer Tiefenrichtung des z-Stapels an der ersten und zweiten seitlichen Position des z-Stapels als dem ersten und zweiten Bildattribut des ersten bzw. zweiten Objekts; und
Bestimmen eines optimalen Objektschichtbildes von jeder der ersten und/oder zweiten Teilmengen von Objektschichtbildern als eines der ersten und/oder zweiten Objektschichtbilder, das eine maximierte Fokusfunktion entlang der Tiefenrichtung aufweist; und
zum Bilden der Mehransichtsdaten als umfassend die ersten und/oder zweiten optimalen Objektschichtbilder.

3. Einrichtung (26) nach Anspruch 2,
wobei die Gesamtzahl der optimalen Objektschichtbilder der Gesamtzahl der Maxima in den Fokusfunktionen an einer Vielzahl von seitlichen Positionen des Z-Stapels entspricht.

4. Einrichtung (20) nach Anspruch 2 oder 3, wobei die Verarbeitungseinheit (28) weiter konfiguriert ist:
zum Bestimmen einer Vielzahl von subsidiären ersten und/oder zweiten Objektschichtbildern als Objektschichtbilder oberhalb und/oder unterhalb des optimalen Objektschichtbildes im Z-Stapel, die Fokusfunktionen aufweisen, die im Vergleich zur Fokusfunktion des optimalen Objektschichtbildes kleiner sind; und
zum Bereitstellen eines oder mehrerer der subsidiären ersten und/oder zweiten Objektschichtbilder als einen Abschnitt der Mehransichtsdaten des Sichtfelds der biologischen Probe.

5. Einrichtung (26) nach einem der vorstehenden Ansprüche, wobei die Verarbeitungseinheit (28) weiter konfiguriert ist:
zum Erzeugen eines Bildes mit erweiterter Tiefenschärfe (EDF) des ersten und/oder zweiten Objekts basierend auf der ersten und/oder zweiten Teilmenge von Objektschichtbildern; und
zum Bilden der Mehransichtsdaten des Sichtfeldes der biologischen Probe, wobei das erste und/oder zweite Objekt als Bilder mit erweiterter Tiefenschärfe (EDF) dargestellt werden, die aus den Bildern der ersten und/oder zweiten Objektschicht bestehen.

6. Einrichtung (26) nach Anspruch 5, wobei die Verarbeitungseinheit (28) weiter konfiguriert ist:
zum Erzeugen eines seitlich interpolierten Bildes durch Interpolieren der Pixelwerte zwischen benachbarten ersten und zweiten Objektschichtbildern in der seitlichen Richtung; und
zum Bereitstellen des seitlich interpolierten Bildes als einen Abschnitt der Mehransichtsdaten des Sichtfelds der biologischen Probe.

7. Einrichtung (26) nach einem der vorstehenden Ansprüche,
wobei Bestimmen des ersten und/oder zweiten Objekts in der Vielzahl von Objektträgerbildern des Z-Stapels Anwenden eines Schärfefilters, eines Kantenfilters, eines Kontrastfilters oder einer Fokusfunktion auf Bilder in der Vielzahl von Objektträgerbildern umfasst, wobei der Schärfe-, der Kanten- und der Kontrastfilter optional auf einen Graustufenwert, einen Farbkanalwert oder einen Intensitätsschwellenwert von Pixeln der Vielzahl von Objektträgerbildern wirkt, um das erste und/oder zweite Bildattribut bereitzustellen.

8. Einrichtung (26) nach einem der vorstehenden Ansprüche, weiter konfiguriert:
zum Anzeigen der Mehransichtsdaten des Sichtfelds einer biologischen Probe auf einer Benutzerschnittstelle einer Benutzeranzeige.

9. Einrichtung (26) nach Anspruch 8, wobei die Einrichtung weiter konfiguriert ist, um auf der Benutzeranzeige bereitzustellen:
(i) ein schematisches Menü, das ein erkanntes Objekt und eine Vielzahl von identifizierten Fokusschichten des erkannten Objekts in dem Z-Stapel veranschaulicht, und (ii) ein Sichtfeldanzeigefenster,
wobei das schematische Menü es einem Benutzer ermöglicht, eine Schicht des Objekts von Interesse aus dem schematischen Menü auszuwählen, und Mehransichtsdaten des Sichtfeldes der biologischen Probe in dem Sichtfeldanzeigefenster angezeigt werden, die die von dem Benutzer ausgewählte Schicht des Objekts beinhalten.

10. Computerimplementiertes Verfahren zur Erzeugung von Mehransichtsdaten eines Sichtfeldes einer biologischen Probe, umfassend:
a) Erhalten (182) eines z-Stapels, der eine Vielzahl von Objektträgerbildern einer biologischen Probe umfasst, wobei jedes Objektträgerbild mit einem vorbestimmten Fokusversatz relativ zu einer Tiefenrichtung (z) der biologischen Probe aufgenommen wurde;
b) Bestimmen (184) eines ersten Objekts und eines zweiten Objekts der Vielzahl von Objektträgerbildern in der Vielzahl von Objektträgerbildern;
c) Bereitstellen (186) einer ersten Teilmenge von Objektschichtbildern des ersten Objekts aus der Vielzahl von Objektträgerbildern, basierend auf einem ersten Bildattribut von Objektträgerbildern des ersten Objekts;
d) Bereitstellen (188) einer zweiten Teilmenge von Objektschichtbildern des zweiten Objekts aus der Vielzahl von Objektträgerbildern, basierend auf einem zweiten Bildattribut von Objektträgerbildern des zweiten Objekts;
wobei ein Objektschichtbild in der jeweiligen ersten oder zweiten Teilmenge einen Bildbereich eines Objektträgerbildes umfasst, der einem Schnitt durch das erste oder zweite Objekt entspricht;
wobei die Schichten des z-Stapels, die die erste und zweite Teilmenge der ersten und zweiten Objektschichtbilder umfassen, unabhängig voneinander basierend auf dem ersten und zweiten Attribut des ersten bzw. zweiten Objekts bereitgestellt werden;
Verarbeiten der ersten Teilmenge von ersten Objektschichtbildern zur Erzeugung eines ersten Objektbildes in Übereinstimmung mit vordefinierten Fokuseigenschaften zur Verbesserung der Bildschärfe;
Verarbeiten der zweiten Teilmenge von zweiten Objektschichtbildern zur Erzeugung eines zweiten Objektbildes in Übereinstimmung mit vordefinierten Fokuseigenschaften zur Verbesserung der Bildschärfe; und
e) Bilden (190) von Mehransichtsdaten des Sichtfeldes der biologischen Probe, die mindestens das erste und das zweite Objektbild umfassen.

11. Verfahren nach Anspruch 10, weiter umfassend:
f) Anzeigen der Mehransichtsdaten des Sichtfelds einer biologischen Probe auf einer Benutzerschnittstelle einer Benutzeranzeige.

12. System zur Erzeugung von Mehransichtsdaten einer biologischen Probe, umfassend:
- eine Einrichtung (26) nach einem der Einrichtungsansprüche 1 bis 9; und
- eine Benutzeranzeige;
wobei die Einrichtung konfiguriert ist, um einen z-Stapel zu empfangen, der eine Vielzahl von Objektträgerbildern einer biologischen Probe umfasst, und um Mehransichtsdaten des Sichtfeldes der biologischen Probe auf der Benutzeranzeige anzuzeigen.

13. Computerprogrammelement zur Steuerung einer Einrichtung nach einem der Ansprüche 1 bis 9, das, wenn es von einer Verarbeitungseinheit ausgeführt wird, die Verarbeitungseinheit veranlasst, das Verfahren nach Anspruch 10 auszuführen.

14. Computerlesbares Medium, auf dem das Computerprogrammelement nach Anspruch 13 gespeichert ist.

15. Vernetztes Computersystem (200), umfassend:
- eine Servervorrichtung (202);
- eine Clientvorrichtung (206); und
- ein Kommunikationsnetzwerk (204, 210), das konfiguriert ist, um Datenkommunikation zwischen der Servervorrichtung und der Clientvorrichtung bereitzustellen;
wobei die Servervorrichtung konfiguriert ist, um die Schritte nach Anspruch 10 durchzuführen, und der Server konfiguriert ist, um die Mehransichtsdaten des Sichtfeldes der biologischen Probe an die Clientvorrichtung zu übertragen; und
wobei die Clientvorrichtung konfiguriert ist, um die von der Servervorrichtung empfangenen Mehransichtsdaten des Sichtfeldes der biologischen Probe zu empfangen.

## Revendications

1. Appareil (26) pour générer des données multivues d'un champ de vision d'un échantillon biologique, comprenant :
- une unité de traitement (28)
dans lequel l'unité de traitement est configurée pour :
obtenir une pile z comprenant une pluralité d'images de lames d'un échantillon biologique, dans lequel chaque image de lame a été acquise à un décalage focal prédéterminé par rapport à une direction de profondeur (z) de l'échantillon biologique ;
déterminer un premier objet et un second objet de la pluralité d'images de lames,
fournir, à partir de la pluralité d'images de lames, un premier sous-ensemble d'images de couches d'objet du premier objet, sur la base d'un premier attribut d'image d'images de lames du premier objet ;
fournir, à partir de la pluralité d'images de lames, un second sous-ensemble d'images de couches d'objet du second objet basé sur un second attribut d'image d'images de lames du second objet ;
dans lequel une image de couches d'objet dans les premier ou second sous-ensembles respectifs comprend une région d'image d'une image de lame correspondant à une tranche dans les premier ou second objets ;
dans lequel les couches de la pile z comprenant les premier et second sous-ensembles de première et seconde images de couches d'objet sont fournies indépendamment les unes des autres sur la base des premier et second attributs des premier et second objets, respectivement ; et
traiter le premier sous-ensemble de premières images de couches d'objet pour créer une première image d'objet conformément à des caractéristiques de mise au point prédéfinies afin d'améliorer l'acuité d'image ;
traiter le second sous-ensemble de secondes images de couches d'objet pour créer une seconde image d'objet conformément à des caractéristiques de mise au point prédéfinies afin d'améliorer l'acuité d'image,
former des données multivues du champ de vision de l'échantillon biologique comprenant au moins les première et seconde images d'objet.

2. Appareil (26) selon la revendication 1, dans lequel l'unité de traitement (28) est en outre configurée pour :
déterminer une fonction de mise au point le long d'une direction de profondeur de la pile z à des premier et second emplacements latéraux de la pile z comme étant les premier et second attributs d'image des premier et second objets, respectivement ; et
déterminer une image de couches d'objet optimale de chacun des premier et/ou second sous-ensembles d'images de couches d'objets comme étant l'une des première et/ou seconde images de couches d'objet présentant une fonction de mise au point maximisée le long de la direction de profondeur; et
former les données multivues comme comprenant les première et/ou seconde images de couches d'objet optimales.

3. Appareil (26) selon la revendication 2,
dans lequel le nombre total d'images de couches d'objet optimales correspond au nombre total de maxima dans les fonctions de mise au point à une pluralité d'emplacements latéraux de la pile z.

4. Appareil (20) selon les revendications 2 ou 3, dans lequel l'unité de traitement (28)
est en outre configurée :
pour déterminer une pluralité de première et/ou seconde images de couches d'objet secondaires comme étant des images de couches d'objet au-dessus et/ou au-dessous de l'image de couches d'objet optimale dans la pile z présentant des fonctions de mise au point qui sont plus petites que la fonction de mise au point de l'image de couches d'objet optimale ; et
pour fournir une ou plusieurs des première et/ou seconde images de couches d'objet secondaires comme une partie des données multivues du champ de vision de l'échantillon biologique.

5. Appareil (26) selon l'une des revendications précédentes, dans lequel l'unité de traitement (28) est en outre configurée :
pour générer une image à profondeur de champ étendue (EDF) des premier et/ou second objets basée sur les premier et/ou second sous-ensembles d'images de couches d'objet ; et
pour former les données multivues du champ de vision de l'échantillon biologique, dans lequel les premier et/ou second objets sont présentés comme des images à profondeur de champ étendue (EDF) composées des première et/ou seconde images de couches d'objet.

6. Appareil (26) selon la revendication 5, dans lequel l'unité de traitement (28) est en outre configurée :
pour générer une image interpolée latéralement en interpolant les valeurs de pixels entre des première et seconde images de couches d'objet adjacentes dans la direction latérale ; et
pour fournir l'image interpolée latéralement comme une partie des données multivues du champ de vision de l'échantillon biologique.

7. Appareil (26) selon l'une des revendications précédentes,
dans lequel la détermination des premier et/ou second objets dans la pluralité d'images de lames de la pile z comprend l'application d'un filtre de netteté, d'un filtre de bord, d'un filtre de contraste ou d'une fonction de mise au point sur des images dans la pluralité d'images de lames, dans lequel les filtres de netteté, de bord et de contraste fonctionnent optionnellement sur une valeur de niveau de gris, une valeur de canal de couleur ou une valeur de seuil d'intensité de pixels de la pluralité d'images de lames, afin de fournir les premier et/ou second attributs d'image.

8. Appareil (26) selon l'une des revendications précédentes, en outre configuré :
pour afficher les données multivues du champ de vision d'un échantillon biologique sur une interface utilisateur d'un écran utilisateur.

9. Appareil (26) selon la revendication 8, dans lequel l'appareil est en outre configuré pour fournir, sur l'écran utilisateur :
(i) un menu schématique illustrant un objet détecté et une pluralité de couches de mise au point identifiées de l'objet détecté dans la pile z, et (ii) une fenêtre d'affichage de champ de vision,
dans lequel le menu schématique permet à un utilisateur de sélectionner une couche de l'objet d'intérêt à partir du menu schématique, et des données multivues du champ de vision de l'échantillon biologique sont affichées dans la fenêtre d'affichage de champ de vision intégrant la couche de l'objet sélectionnée par l'utilisateur.

10. Procédé mis en œuvre par ordinateur pour générer des données multivues d'un champ de vision d'un échantillon biologique, comprenant :
a) l'obtention (182) d'une pile z comprenant une pluralité d'images de lames d'un échantillon biologique, dans lequel chaque image de lame a été acquise à un décalage focal prédéterminé par rapport à une direction de profondeur (z) de l'échantillon biologique ;
b) la détermination (184) d'un premier objet et d'un second objet de la pluralité d'images de lames dans la pluralité d'images de lames ;
c) la fourniture (186), à partir de la pluralité d'images de lames, d'un premier sous-ensemble d'images de couches d'objet du premier objet basé sur un premier attribut d'image d'images de lames du premier objet ;
d) la fourniture (188), à partir de la pluralité d'images de lames, d'un second sous-ensemble d'images de couches d'objet du second objet basé sur un second attribut d'image d'images de lames du second objet ;
dans lequel une image de couches d'objet dans les premier ou second sous-ensembles respectifs comprend une région d'image d'une image de lame correspondant à une tranche dans les premier ou second objets ;
dans lequel les couches de la pile z comprenant les premier et second sous-ensembles de première et seconde images de couches d'objet sont fournies indépendamment les unes des autres sur la base de premier et second attributs d'image des premier et second objets, respectivement ;
le traitement du premier sous-ensemble de premières images de couches d'objet pour créer une première image d'objet conformément à des caractéristiques de mise au point prédéfinies afin d'améliorer l'acuité d'image ;
le traitement du second sous-ensemble de secondes images de couches d'objet pour créer une seconde image d'objet conformément à des caractéristiques de mise au point prédéfinies afin d'améliorer l'acuité d'image ; et
e) la formation (190) de données multivues du champ de vision de l'échantillon biologique comprenant au moins la première et la seconde image d'objet.

11. Procédé selon la revendication 10, comprenant en outre :
f) l'affichage des données multivues du champ de vision d'un échantillon biologique sur une interface utilisateur d'un écran utilisateur.

12. Système pour générer des données multivues d'un échantillon biologique comprenant :
- un appareil (26) selon l'une des revendications d'appareil 1 à 9 ; et
- un écran utilisateur ;
dans lequel l'appareil est configuré pour recevoir une pile z comprenant une pluralité d'images de lames d'un échantillon biologique, et pour afficher des données multivues du champ de vision de l'échantillon biologique sur l'écran utilisateur.

13. Élément de programme informatique destiné à commander un appareil selon l'une des revendications 1 à 9 qui, lorsqu'il est exécuté par une unité de traitement, amène l'unité de traitement à mettre en œuvre le procédé selon la revendication 10.

14. Support lisible par ordinateur sur lequel est stocké l'élément de programme informatique selon la revendication 13.

15. Système informatique en réseau (200), comprenant :
- un dispositif serveur (202) ;
- un dispositif client (206) ; et
- un réseau de communication (204, 210) configuré pour assurer la communication de données entre le dispositif serveur et le dispositif client ;
dans lequel le dispositif serveur est configuré pour réaliser les étapes de la revendication 10, et le serveur est configuré pour transmettre les données multivues du champ de vision de l'échantillon biologique au dispositif client ; et
dans lequel le dispositif client est configuré pour recevoir les données multivues du champ de vision de l'échantillon biologique reçues en provenance du dispositif serveur.
